# EUROPÄISCHE PATENTANMELDUNG

(11) **EP 4 628 408 A1**
(43) Veröffentlichungstag der Anmeldung: **08.10.2025**
(21) Anmeldenummer: 24168260.8
(22) Anmeldetag: 03.04.2024
(51) Int. Cl.: B64F 1/36, B65G 1/137

(54) **BELADUNG VON CONTAINERN MIT STÜCKGÜTERN**

(71) Anmelder: Siemens Logistics GmbH, 90429 Nürnberg (DE)
(72) Erfinder: Klein, Matthias, 63456 Hanau (DE); Mueck, Bengt, 90429 Nürnberg (DE); Warmbier, Ulrich, 90614 Ammerndorf (DE)
(74) Vertreter: Siemens Patent Attorneys

(57) **Zusammenfassung**

Verfahren zum Beladen von mindestens zwei Behältern (2) mit jeweils mehreren Stückgütern (3), insbesondere mit jeweils mehreren Gepäckstücken, wobei jedem Stückgut (3) mittels eines Sortierkriteriums (13) einer der mindestens zwei Behälter (2) zuordenbar ist; das Verfahren umfassend:
a) Zuführen der Stückgüter (3) auf einer Stückgüterförderanlage (9), insbesondere einer Gepäckförderanlage, insbesondere einer Fluggepäckförderanlage, zu einer Sortierzelle (1);
b) Aufnehmen der besagter Sortierzelle (1) zugeführten Stückgüter (3) mittels eines Beladeroboters (4);
c) Laden der Stückgüter (3) durch den Beladeroboter (4) in den mittels des Sortierkriteriums (13) dem jeweiligen Stückgut (3) zuordenbaren Behälter (2).

## Beschreibung

Die vorliegende Erfindung betrifft das technische Gebiet des Beladens von Behältern mit Stückgütern, insbesondere von Unit Load Devices (ULD) oder sonstigen Behältern mit Gepäckstücken.

Fluggepäck wird oftmals in Container verladen. Insbesondere wird dabei Fluggepäck auch in oftmals in Unit Load Devices (ULD) verladen. Diese ULD sind normiert und weisen meist eine an den Frachtraum eines Flugzeugs angepasste Form und Dimension auf, damit sie möglichst effizient und automatisch in das Flugzeug geladen werden können. Die ULD werden meistens manuell mit Gepäckstücken beladen. Vereinzelte Installationen von Verladerobotern sind bekannt. Auch Maschinen zur Unterstützung des Menschen sind bekannt.

Dabei bedient ein Roboter von einer Übergabeposition genau ein ULD. Dies erfordert zum einen Positionen, wo eine Menge von Koffern für dieses ULD bereitgestellt werden muss. Ist das Batch nicht vollständig kann das ULD nicht komplett beladen werden. Daneben entstehen Wartezeiten für den Roboter, wenn ein ULD ausgewechselt wird, wodurch der mögliche Durchsatz eines Roboters nicht erreicht wird.

Die Verteilung der Gepäckstücker auf ULDs erfolgt anhand von Sortierkriterien. Sortierkriterien können dabei beschreiben, was bei nach der Landung, also am nächsten Ziel, mit einem Gepäckstück geschehen soll, beispielsweise ob es für Transfer oder für Terminierung vorgesehen ist. Transfer bedeutet, dass es direkt am nächsten Ziel in ein anderes Flugzeug verladen werden soll. Im Gegensatz dazu wird es bei der Terminierung zum Baggage Claim befördert, wo es vom Besitzer in Empfang genommen wird. Andere Sortierkriterien können beispielsweise die Buchungsklasse, oder die Dringlichkeit der weiteren Verarbeitung, also ob es sich um Short Connection handelt. ULD mit gemischten Sortierkriterien sind bekannt. Um ein ULD zu beladen, sind im Flughafen-Sortiersystem vorzugsweise eine ausreichende Anzahl von Gepäckstücke für das oder die dem ULD zugeordneten Sortierkriterium oder Sortierkriterien vorhanden, damit das ULD einen wirtschaftlich sinnvollen Füllgrad erreicht. Ebenso sollte ein freies ULD verfügbar sein. Wird die Beladung des ULD mit einer Ladeunterstützung oder einem Verladeroboter vorgenommen, so diese bevorzugt synchronisiert am Ort der Maschine vorgenommen. Für eine hohe Auslastung der Maschine müssen kontinuierlich ULDs mit Gruppen von Koffern mit demselben Gruppierungskriterium zusammengeführt werden.

Viele Flugzeuge werden nicht mit ULDs beladen. Das Gepäck wird dabei meist einzeln, manuell in die Laderäume verbracht. Auf dem Weg zwischen Gepäckförderanlage und Flugzeug können jedoch auch Gepäckwagen mit Behältern eingesetzt werden. Die Behälter können fest auf dem Gepäckwagen montiert oder auch von diesem entfernbar sein, indem die Behälter beispielsweise auf eine Plattform des Gepäckwagens gestellt werden. Auch diese Behälter können wie ULDs mit mehreren Gepäckstücken beladen werden.

Sowohl ULDs als auch Gepäckwagen werden in der Regel manuell beladen. ULDs von einem Flug aber mit verschiedenen Sortierkriterien werden neben einem Gepäckkarussell geparkt. Mitarbeiter nehmen die Koffer von einem Ausgabeförderer einer Gepäckförderanlage und legen sie manuell in das ULD mit passendem zugewiesenen Sortierkriterium. Damit sich eine automatische Beladung der ULDs lohnt, muss eine hinreichende Menge an zu verladenden Gepäckstücken in der Flughafen-Gepäckförderanlage sein (z.B. im Frühgepäckspeicher). Diese Gepäckstücke werden in einen Speicherbereich in der Nähe der (semi-)automatischen Beladung gefahren. Ein ULD wird zu der Beladung gefahren. Das ULD wird mit der Maschine/dem Roboter soweit möglich mit den Gepäckstücken beladen. Sowohl die ULDs als auch die Gepäckstücke werden zu dem Roboter gefahren.

ULDs werden mit niedrigen Geschwindigkeiten bewegt. Der Wechsel eines ULD benötigt Zeit. Der Durchsatz der Anlage wird dadurch reduziert.

Befindet sich nur ein Teil aller in ein ULD zu ladenden Gepäckstücke in der Flughafen-Gepäckförderanlage, kann keine vollständige Beladung des ULD stattfinden. Das ULD muss deshalb entweder mehrfach zu der Beladezelle gebracht werden, wodurch sich die Effizienz des Beladevorgangs des ULD reduziert. Zudem reduziert sich dadurch auch die Effizienz und/oder die Kapazität des Gepäckfördersystems. Alternativ kann auch gewartet werden, bis sich hinreichend Koffer in der Gepäckförderanlage befinden, um das ULD zu beladen. Allerdings reduziert sich durch die Verschiebung des Beladezeitpunkts durch die verstärkte Auslastung beispielsweise des Frühgepäckspeichers ebenfalls die Effizienz und die freie Kapazität des Gepäckfördersystems, da sich die Gepäckstücke länger in der Anlage befinden. Es wird somit mehr Speicherkapazität in der Gepäckförderanlage benötigt. Dadurch können vermehrt Verladepeaks entstehen. Speicherbereiche in der Nähe des Verladeroboters mit der Kapazität von wenigstens einem ULD (besser mehreren) sollten deshalb zur Verfügung stehen.

Der vorliegenden Erfindung liegt die Aufgabe zugrunde, die sortierkriterienabhängige Beladung von Behältern mit jeweils mehreren Stückgütern zu optimieren. Diese Aufgabe wird durch die in den unabhängigen Ansprüchen beschriebenen Lösungen gelöst. Vorteilhafte Ausgestaltungen der Erfindung sind in weiteren Ansprüchen angegeben.

Gemäß einem Aspekt wird ein Verfahren zum Beladen von mindestens zwei Behältern mit jeweils mehreren Stückgütern vorgeschlagen. Den Stückgütern ist dabei mittels eines Sortierkriteriums einer der mindestens zwei Behälter zuordenbar. Die Stückgüter werden auf einer Stückgüterförderanlage einer Sortierzelle zugeführt. Jedes der besagter Sortierzelle zugeführten Stückgüter werden mittels eines Beladeroboters aufgenommen, vorzugsweise durch den Roboter ergriffen, und in den mittels des Sortierkriteriums dem jeweiligen Stückgut zuordenbaren Behälter geladen.

Gemäß einem Aspekt wird eine Beladesystem vorgeschlagen, welches Mittel umfasst, die ausgestaltet und eingerichtet sind, das erfindungsgemäße Verfahren durchzuführen.

Gemäß einem Aspekt wird eine Sortierzelle zum Beladen von mindestens zwei Behältern mit jeweils mehreren Stückgütern vorgeschlagen. Die Sortierzelle umfasst einen Beladeroboter, mindestens zwei Behälterplätze, eine Zuführvorrichtung, einen Ladebereich und ein Steuersystem. Jeder der mindestens zwei Behälterplätze ist ausgestaltet, mindestens einen der mindestens zwei Behälter aufzunehmen. Die Zuführvorrichtung ist ausgestaltet, Stückgüter von einer Stückgüterförderanlage aufzunehmen und einem Ladebereich in der Sortierzelle zuzuführen, von welchem der Beladeroboter das Stückgut aufnehmen kann. Das Steuersystem ist konfiguriert, den Beladeroboter so anzusteuern, dass dieser ein dem Ladebereich zugeführtes Stückgut aufnimmt und dieses in den mittels des Sortierkriteriums dem jeweiligen Stückgut zuordenbaren auf einem der Behälterplätze aufgenommenen Behälter lädt.

Weiterbildungen der Erfindung beschreibende Varianten werden nachfolgend beispielhaft ohne Beschränkung des grundlegenden Gedankens der Erfindung erläutert.

Gemäß einer Variante sind die Stückgüter Gepäckstücke und ist die Stückgüterförderanlage eine Gepäckförderanlage. Gemäß einem weiteren Ausführungsbeispiel sind die Stückgüter Fluggepäckstücke und die Stückgüterförderanlage ist eine Fluggepäckförderanlage.

Gemäß einer Variante ist der Beladeroboter ein Greifroboter oder umfasst einen solchen. Die Stückgüter werden in diesen Ausführungsbeispielen durch den Beladeroboter aufgenommen, indem der Beladeroboter die Stückgüter ergreift.

Gemäß einer Variante sind die oben erklärten Aspekte der Erfindung dadurch bestimmt, dass die Zuführvorrichtung genau einen Förderer umfasst, welcher der Sortierzelle die Stückgüter zuführt. Dies erlaubt einen einfachen Aufbau der Sortierzelle.

Gemäß einer Variante sind die oben erklärten Aspekte der Erfindung dadurch bestimmt, dass die Zuführvorrichtung mindestens zwei Förderer umfasst, welche der Sortierzelle die Stückgüter zuführen. Dies erlaubt eine höhere Flexibilität. Beispielsweise ermöglicht dies, dass jedem Förderer eines der Sortierkriterien zugeordnet ist, und jedem Förderer nur Stückgüter zugeführt werden, denen das jeweilige Sortierkriterium zugeordnet ist. Dadurch kann das Steuersystem des Beladeroboters entlastet werden, da bereits klar ist, wo der Beladeroboter ein Stückgut aufnehmen muss, um einen gegebenen Behälter weiter zu befüllen. Dies hat beispielsweise den Vorteil, dass keine Wartezeit des Beladeroboters entsteht, wenn ein Behälterwechsel ansteht und auf den Förderern zufälligerweise gerade nur Stückgüter für den zu wechselnden Behälter vorliegen. Diese Situation ist wahrscheinlicher als es auf den ersten Blick erscheint, da Stückgüter in verfügbare Container eingeladen werden, bis das jeweilige Band durch Stückgüter verstopft wird, für die gerade kein zugeordneter Container auf einem der Ladeplätze verfügbar ist.

Gemäß einer Variante sind die oben erklärten Aspekte der Erfindung dadurch bestimmt, dass der Beladeroboter innerhalb der Sortierzelle in horizontaler Richtung automatisch bewegt wird, um an eine Position gebracht zu werden, die geeignet ist, einen Behälter mit einem von dem Roboter aufgenommenen Stückgut beladen zu können. Dazu kann die Sortierzelle ein durch das Steuersystem kontrollierbares Fahrmittel umfassen. Das Steuersystem und das Fahrmittel sind dabei konfiguriert, den Beladeroboter als Ganzes in horizontaler Richtung automatisch zu bewegen und dabei in eine Position zu bringen, die es ermöglicht, dass der Beladeroboter den dem Stückgut zugeordneten Behälter mit dem Stückgut beladen kann.

Ein Vorteil dieser Variante besteht darin, dass der Arbeitsbereich des Roboters vergrössert wird, wodurch mehr Behälterplätze in der Sortierzelle angeordnet und somit mehr Behälter gleichzeitig durch den Beladeroboter bedient werden können Gemäß einer Variante wird der Beladeroboter innerhalb der Sortierzelle in horizontaler Richtung auf einem linearen Fahrweg automatisch bewegt, um an eine Position gebracht zu werden, die geeignet ist, einen der Behälter mit einem von dem Beladeroboter aufgenommenen Stückgut beladen zu können. Dabei sind die mindestens zwei Behälter auf einer ersten Seite des linearen Fahrwegs angeordnet. Ein zuführender Teil der Stückgüterförderanlage, der der Sortierzelle die Stückgüter zuführt, ist auf der anderen Seite, also auf einer zweiten Seite, des linearen Fahrwegs angeordnet.

Ein Vorteil dieser Variante besteht darin, dass dadurch eine besonders effiziente Beladung der Behälter vorgenommen werden kann, da so verhindert werden kann, dass sich der Beladeroboter und die Zuführvorrichtung gegenseitig behindern.

Gemäß einer Variante sind die oben erklärten Aspekte der Erfindung dadurch bestimmt, dass die Sortierzelle ein Lagersystem umfasst, und die Stückgüter auf der Stückgüterförderanlage dem Lagersystem zugeführt und in dieses eingebracht werden. Dazu kann die Zuführvorrichtung, die gleichzeitig Teil der Sortierzelle und der Stückgüterförderanlage ist ausgestaltet sein, die Stückgüter dem Lagersystem zuzuführen und in dieses einzubringen. Gemäß dieser Variante nimmt der Beladeroboter im Lagersystem ein zur Lagerung eingebrachtes Stückgut direkt aus dem Lager auf, um dieses Stückgut in den ihm mittels des Sortierkriteriums zuordenbaren Behälter zu laden.

Ein Vorteil dieser Variante besteht darin, dass sich so die Flexibilität und die Effizienz des Beladevorgangs erhöhen. Es können einerseits Wartezeiten für den Beladeroboter reduziert und dadurch seine Auslastung erhöht werden, da die Anzahl der zum in einen der Behälter zu beladenden Stückgüter erhöht wird und somit vermieden werden kann, dass gerade kein Stückgut für die aktuell sich auf den Beladeplätzen befindenden Behälter in der Sortierzelle vorhanden ist. Zudem kann das Lagersystem auch als Zwischenlager verwendet werden, beispielsweise als Frühgepäckspeicher, wodurch Umladevorgänge vermieden werden können, da so Gepäckstücke direkt vom Frühgepäckspeicher in ein ULD oder sonstigen Behälter geladen werden können.

Gemäß einer Variante sind die oben erklärten Aspekte der Erfindung dadurch bestimmt, dass die Stückgüter von einer ersten Lagersystemseite her in das Lagersystem eingebracht werden und der Beladeroboter im Lagersystem zur Lagerung eingebrachte Stückgüter von der anderen Lagersystemseite her, also einer zweiten Lagersystemseite, die von der ersten Lagersystemseite verschieden ist, direkt aus dem Lagersystem aufzunehmen.

Ein Vorteil dieser Variante besteht darin, dass dadurch eine besonders effiziente Beladung der Behälter vorgenommen werden kann, da so verhindert werden kann, dass sich der Beladeroboter und die Zuführvorrichtung gegenseitig behindern.

Gemäß weiteren Varianten können die Sortierkriterien aus einem oder mehreren der folgenden Parameter abgeleitet werden:
- Eine Reiseverbindung wie beispielsweise eine Flugverbindung, die mit einer Flugnummer identifizierbar ist;
- ein Abflugzeitpunkt;
- ein Ankunftszeitpunkt;
- ein Abflugort;
- ein Ankunftsort;
- ob es sich um ein Gepäckstück für Transfer oder Terminierung handelt;
- eine Buchungsklasse;
- eine Dringlichkeit der weiteren Verarbeitung, insbesondere ob es sich um eine Short Connection, also um einen Anschlussflug mit knapper Zeit für den Transfer handelt.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Varianten der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch mit den vorstehend beschriebenen Varianten der Erfindung kombinierbar. Dabei zeigen:
Figur 1 ein Blockdiagramm einer Sortierzelle gemäß einem Ausführungsbeispiel der Erfindung;
Figur 2 ein Blockdiagramm einer Sortierzelle gemäß einem Ausführungsbeispiel der Erfindung;
Figur 3 ein Blockdiagramm einer Sortierzelle gemäß einem Ausführungsbeispiel der Erfindung;
Figur 4 ein Blockdiagramm einer Sortierzelle gemäß einem Ausführungsbeispiel der Erfindung;
Figur 5 ein Flussdiagramm eines Verfahrens gemäß einem Ausführungsbeispiel der Erfindung.

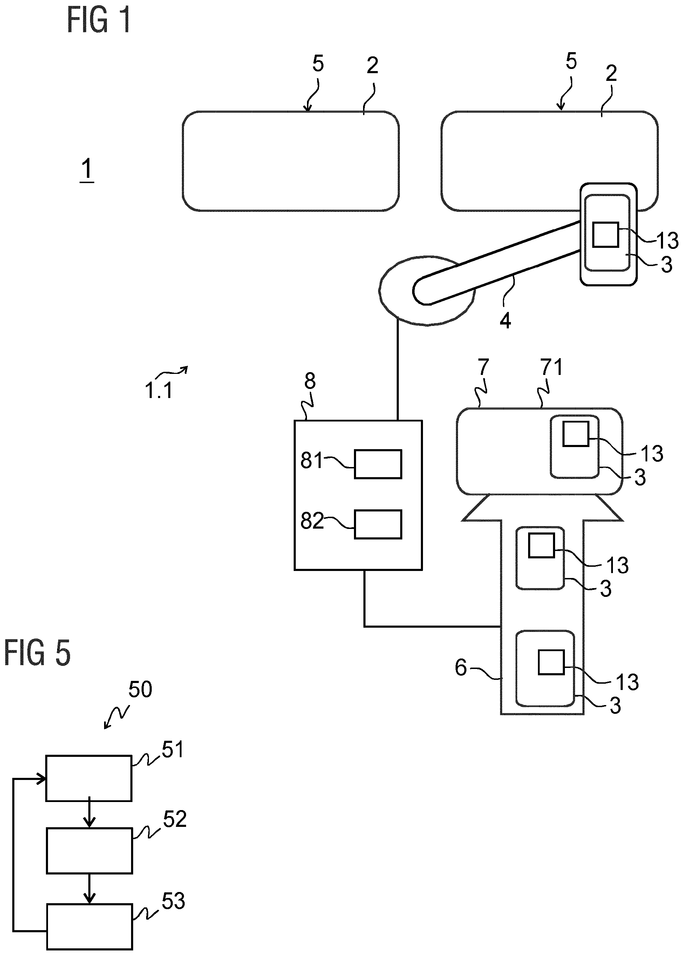

Figur 1 zeigt schematisch eine Sortierzelle 1.1 zum Beladen von mindestens zwei ULDs 2 mit jeweils mehreren Gepäckstücken gemäß einem Ausführungsbeispiel der Erfindung. Die Sortierzelle 1.1 umfasst einen Beladeroboter 4, mehrere Behälterplätze 5, eine Zuführvorrichtung 6, einen Ladebereich 7 und ein Steuersystem 8. Auf jedem der Behälterplätze 5 ist ein als ULD ausgestalteter Behälter 2 abgestellt. Die Zuführvorrichtung 6 ist ausgestaltet, Stückgüter 3 von einer als Fluggepäckförderanlage ausgestalteten Stückgüterförderanlage 9 aufzunehmen und dem Ladebereich 7 zuzuführen. Der Beladeroboter 4 ist ausgestaltet, das Stückgut 3 von dem Beladebereich zu ergreifen. Das Steuersystem 8 umfasst einen Datenspeicher 81 und einen Prozessor 82. Der Datenspeicher umfasst Daten und Instruktionen, die wenn sie auf dem Prozessor 82 ausgeführt zu werden, den Beladeroboter 4 so ansteuern, dass dieser ein dem Ladebereich 7 zugeführtes Stückgut 3 ergreift und dieses in den mittels des Sortierkriteriums 13 dem jeweiligen Stückgut 3 zuordenbaren auf einem der Behälterplätze 5 abgestellten Behälter 2 lädt.

Die ULDs 2 werden relativ zum Beladeroboter 4 in einer Art angeordnet, dass der Beladeroboter 4 in mehrere ULDs 2 (wenigstens in zwei ULDs 2) seine Koffer 3 oder sonstigen Gepäckstücke 3 einladen kann. Die ULDs 2 können hierbei nebeneinander stehen. Andere Anordnungen sind auch möglich. So können die ULDs 2 beispielsweise auf einem Kreisbogen um den Roboter 4 herum angeordnet sein, wodurch sich die Varianz der Abstände des Roboters 4 zu den Behältern 2 reduzieren oder gar eliminieren lässt. Eine Anordnung der Behälter 2 und der Behälterplätze 5 übereinander ist auch möglich.

Je größer die Anzahl der von einem Beladeroboter 4 zugreifbaren ULDs 2 ist, desto weniger stören teilbeladene ULDs 2 den Durchsatz der Sortierzelle 1.

Muss ein ULD 2 gewechselt werden, kann der Beladeroboter 4 während des Wechsels weiter auf das/die anderen ULD 2 zugreifen und diese beladen. Die Beladung kann somit ohne Unterbrechung weiterlaufen, die Wechselzeit, die für den Wechsel des Behälters 2 benötigt wird, geht nicht oder nur reduziert in den Durchsatz ein.

In der in Figur 1 gezeigten Sortierzelle 1 umfasst die Zuführvorrichtung 6 lediglich einen als Bandförderer ausgestalteten Stetigförderer, um dem Ladebereich 7 Stückgüter 3 zuzuführen.

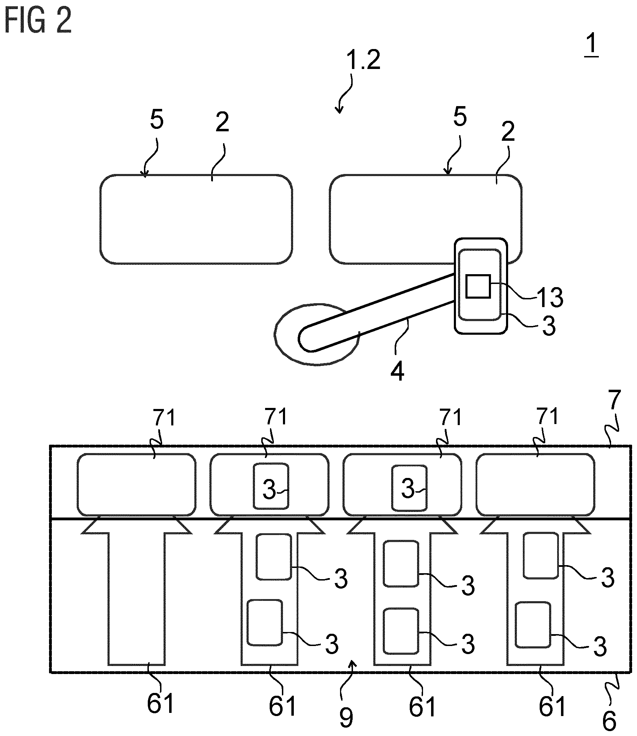

Figur 2 zeigt schematisch eine verbesserte Sortierzelle 1.2 der in Figur 1 dargestellten Sortierzelle 1, bei welcher die Zuführvorrichtung 6 mehrere Sammelbänder oder sonstige Stetigförderer umfasst, welche ausgestaltet sind, dem Ladebereich 7 Stückgüter 3 zuzuführen.

Werden der in der Figur 1 gezeigten Sortierzelle 1.1 noch wenigstens ein weiteres Sammelband oder sonstiger Förderer 61 hinzugefügt, erhöht sich die Flexibilität. Beispielsweise kann jedem Förderer 61 ein Sortierkriterium 13 zugeordnet werden, sodass dass auf jedem Sammelband nur Stückgüter 3 mit einem Sortierkriterium 13 oder einer Gruppe von Sortierkriterien 13 dem Beladebereich zugeführt werden. Dies bewirkt eine optimierte Auslastung des Beladeroboters 4, da vermieden werden kann, dass Stückgüter 3, die gerade nicht in einen Behälter 2 geladen werden können, da dieser Behälter 2 beispielswese gerade ausgewechselt wird, sämtliche Förderer 61 der Zuführvorrichtung 6 blockieren, und so Stückgüter 3 mit Sortierkriterien für die sich gerade ein Behälter 2 auf einem Sortierplätze der Sortierzelle 1 befindet unnötigerweise nicht in diesen Behälter 2 geladen werden können.

Auf diese Weise kann sichergestellt werden, dass Behälterwechsel oder Wechsel zwischen Sortierkriterien nicht zu einer Unterbrechung des Ladeprozesses führen. Stockt die Nachführung von Stückgütern 3 auf einem Sammelband oder sonstigen Förderer 61 der Zuführvorrichtung 6, so kann der Beladeroboter 4 die Stückgüter 3 auf den restlichen Sammelbändern abarbeiten. Insbesondere erlaubt diese Anordnung eine Teilbeladung von ULDs 2 ohne diese am Ladeplatz auszutauschen, solange hinreichend Gepäckstücke 3 für andere ULDs 2 für eine kontinuierliche Beladung wenigstens einer anderen ULD 2 bereitgestellt werden. Zudem reduziert sich die benötigte Größe der Batches für ein kontinuierliches Arbeiten des Beladeroboters 4.

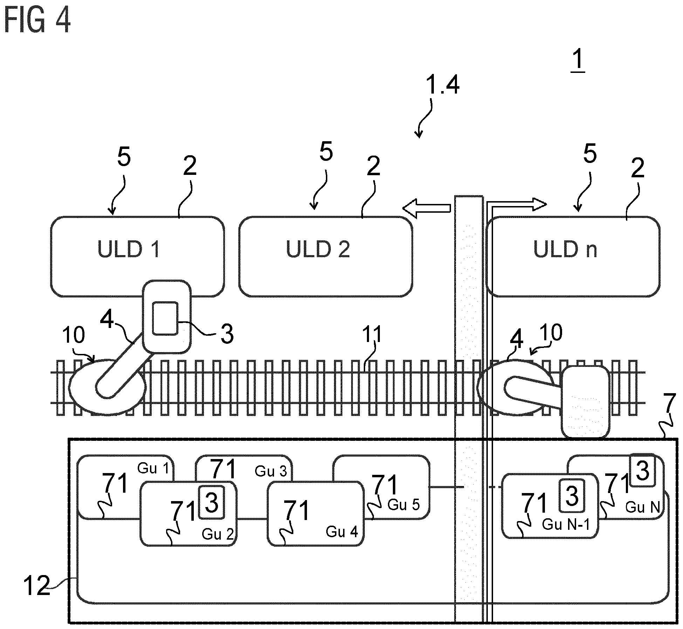

Wird dasselbe Sortierkriterium 13 an mehreren Gepäckübergabestellen 71 bereitgestellt, kann eine Entscheidung anhand von physischen Kriterien des Gepäckstücks 3 und des aktuellen Beladestandes für die nächste Verladung getroffen werden. Werden passende Koffer so berücksichtigt, kann der Füllgrad eines ULD 2 und/oder die Stabilität des Stapels der Koffer in dem ULD verbessert werden. Jeder der Förderer 61 des Zuführvorrichtung 6 und/oder der Ladebereich 7 stellt dabei eine Gepäckübergabestelle 71 dar. Wie anhand des Ausführungsbeispiels von Figur 4 weiter unten noch ausgeführt wird, kann eine Gepäckübergabestelle 71 auch ein Ablageort eines Lagersystems 12, beispielsweise eines Regallagers oder Matrixlagers sein, so dass sich derselbe vorteilhafte Effekt auch auf andere Weise bewirken lässt.

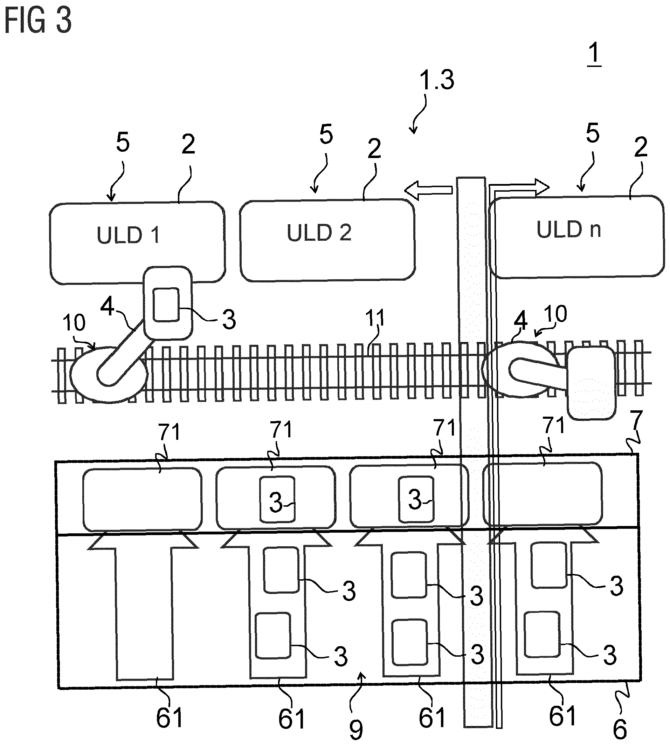

Figur 3 zeigt eine Sortierzelle 1.3 gemäß einem weiteren Ausführungsbeispiel der Erfindung. Diese Sortierzelle 1.3 baut auf dem Konzept der Sortierzellen 1 der Ausführungsbeispiele der Figuren 1 und 2 auf. Um die Anzahl der zugreifbaren ULDs 2 aber auch Sammelbänder zu erhöhen, umfasst der Beladeroboter 4 ein Fahrmittel 10, mittels welchem er auf einem vorzugsweise linearen Fahrweg 11 verfahrbar ist. Dadurch kann die Menge der zugreifbaren ULDs 2 und/oder der Sammelbänder oder sonstigen Stetigförderer der Zuführvorrichtung 6 erhöht werden, und es können noch kleinere durch Sortierkriterien definierte Gruppen von Gepäckstücken 3 in ULDs 2 verladen werden. Zudem können mehr ULDs 2 teilbeladen in der Sortierzelle 1.3 stehen gelassen werden, da sich mehr Beladeplätze in der Sortierzelle 1.3 anordnen lassen. Wie in dem in Figur 2 gezeigten Ausführungsbeispiel kann die Zuordnung von Sortierkriterien zu Sammelbändern zu einer höheren Flexibilität der Auswahl des nächsten durch den Beladeroboter 4 zu verarbeitenden Stückguts 3 führen. Dies ermöglicht stabilere und dichtere Beladungen und eine verbesserte Auslastung des Beladeroboters 4.

In einer weiteren Ausführungsform kann die Sortierzelle 1 auch mehrere Beladeroboter 4 umfassen. Die Beladung der ULDs 2 kann somit auch mit mehreren Robotern und gelagerten ULDs 2 erfolgen: Eine Menge von ULDs 2 stehen nebeneinander (und in einer weiteren Variante auch übereinander) im Lagersystem 12. Die Öffnungen für die Beladung zeigen zur Außenseite des Lagers. An der Außenseite sind Wege für die Roboter angebracht.

Sammelbänder für Sortierkriterien sind auf der gegenüberliegenden Seite vorgesehen (andere physische Anordnungen z.B. in einer anderen Ebene sind auch möglich). Wann immer ein Gepäckstück 3 für ein ULD 2 bereitsteht, verfährt ein Roboter in den Bereich zwischen Sammelband und ULD 2 und verlädt diese Menge.

Die anhand von Figur 3 illustrierten Ausführungsbeispiele der Erfindung erlauben durch die größere Anzahl an für den direkten Zugriff verfügbaren ULDs 2 und Sammelbändern frühzeitig kleinere Mengen an Gepäck zu verladen. Verladepeaks reduzieren sich, weniger Gepäck muss im Anlagengepäckspeicher verweilen, die Beladeroboter 4 können kontinuierlicher arbeiten.

Ähnlich wie in den anhand von Figur 2 illustrierten Varianten erlaubt die vergrößerte Anzahl von Sammelbändern in den Varianten von Figur 3 die Auswahl eines passenden Koffers und somit eine erhöhte Packdichte des ULD 2.

Figur 4 zeigt eine Sortierzelle 1.4 gemäß einem weiteren Ausführungsbeispiel der Erfindung. Diese Sortierzelle 1.4 baut auf dem Konzept der Sortierzellen 1 der Ausführungsbeispiele der Figuren 1, 2 und 3 auf. Die Sortierzelle 1.4 umfasst ein als Matrixlager ausgestaltetes Lagersystem 12, das konfiguriert ist, mit der Zuführvorrichtung 6 zusammenzuwirken, um die Stückgüter 3 dem Lagersystem 12 zuzuführen und in dieses einzubringen. Das Matrixlager kann einstöckig oder mehrstöckig ausgestaltet sein. Der Beladeroboter 4 ist ausgestaltet und durch das Steuersystem 8 kontrollierbar, um im Lagersystem 12 zur Lagerung eingebrachte Stückgüter 3 direkt aus dem Lagersystem 12 zu greifen. Die Zuführvorrichtung 6 ist ausgestaltet und angeordnet, die Stückgüter 3 auf einer ersten Seite des Lagersystems 12 in das Lagersystem 12 einzubringen und der Beladeroboter 4 ist angeordnet und ausgestaltet, im Lagersystem 12 zur Lagerung eingebrachte Stückgüter 3 von einer zweiten Seite des Lagersystems 12, die von der ersten Seite verschieden ist, direkt aus dem Matrixlager ohne lokale Sammelplätze als Zwischenablage zu greifen. Eine solche Sortierzelle erlaubt durch eine hohe Zahl an Gepäckübergabestellen Gu 1, GU 2, Gu 3, Gu 4, Gu 5, ... Gu N-1, Gu N eine besonders hohe Flexibilität.

Gemäß einem Ausführungsbeispiel kann ein in EP 3057887 B1 offenbartes Lagersystem 12 in der Sortierzelle 1.4 verwendet werden. Wird solch ein Lager ertüchtigt einzelne Koffer an vielen Stellen an einen Verladerobot direkt zu übergeben, kann dieses anstelle der Förderer 61 flussaufwärts des Beladeroboters 4 oder der Beladeroboter 4 verwendet werden. Die Beladeroboter 4 bewegen sich in diesem Fall zwischen den Behältern 2 und dem reinen Gepäcklager, das beispielsweise ein Frühgepäckspeicher sein kann.

Koffer und sonstige Gepäckstücke werden direkt aus dem Gepäcklager in die ULDs 2 umgeladen. Hat das Lagersystem 12 hinreichend Kapazität und Transferpositionen, die ein Roboter aus einer Position erreichen kann, kann so ein gleichmäßiger Strom von Gepäckstücken 3 zur Beladung der Behälter 2 erreicht werden. Ein gemeinsames Ausfahren aus dem Gepäcklager und Bereitstellen für eine Beladung auf kurzfristigen Speichern entfällt in dieser Lösung komplett.

Ist die bereitgestellte Menge der Koffer für ein an einem Behälterplatz 5 zu beladendes ULD 2 zu groß, können die Gepäckstücke 3 in einem Ausführungsbeispiel wieder ins Lager eingebracht werden.

Figur 5 zeigt ein Flussdiagramm eines Verfahrens 50 zum Beladen von mindestens zwei Behältern 2 mit jeweils mehreren Gepäckstücken 3.

In einem Verfahrensschritt 51 wird einem Gepäckstück 3 mittels eines Sortierkriteriums 13 einer der mindestens zwei Behälter 2 zugeordnet.

In einem Verfahrensschritt 52 wird das Gepäckstück 3 auf einer Fluggepäckförderanlage einer Sortierzelle 1 zugeführt.

In einem Verfahrensschritt 53 greift ein Beladeroboter 4 das Stückgut 3 und in einem weiteren Verfahrensschritt lädt der Beladeroboter 4 das Gepäckstück 3 mittels des Sortierkriteriums 13 in den dem Gepäckstück 3 zugeordneten Behälter 2.

Die Verfahrensschritte 51, 52, 53 werden iterativ für weitere Gepäckstücke 3 durchgeführt.

Gemäß einem Ausführungsbeispiel kann ein Beladeroboter 4 mit einem der wenigstens zwei ULDs 2 ohne Unterbrechung weiterarbeiten, wenn das Gepäck oder sonstige Stückgut 3 für das erste ULD noch nicht vorliegt oder das ULD 2 sich gerade in einem Wechsel befindet.

Gemäß einem Ausführungsbeispiel können durch direkten Zugriff des oder der Beladeroboter 4 auf eine Menge von ULDs 2 und Sammelbänder Teilbeladungen realisiert werden, ohne die ULDs 2 verrücken zu müssen.

Gemäß einem Ausführungsbeispiel werden mehrere Sammelbänder mit dem gleichen Sortierkriterium 13 gefüllt. So kann eine Auswahl des physisch besser passenden Gepäckstückes 3 für ein ULD getroffen werden. Der Füllgrad des ULD 2 verbessert sich dadurch.

Gemäß einem Ausführungsbeispiel müssen durch die direkte Anbindung eines Matrixlagers keine Batches von Gepäckstücken 3 oder sonstigen Stückgütern 3 mehr in der Anlage vorbereitet und von einem Lager in eine lokale Position gefahren werden. Lokale Sammelstellen entfallen.

## Patentansprüche

1. Verfahren zum Beladen von mindestens zwei Behältern (2) mit jeweils mehreren Stückgütern (3), insbesondere mit jeweils mehreren Gepäckstücken, wobei jedem Stückgut (3) mittels eines Sortierkriteriums (13) einer der mindestens zwei Behälter (2) zuordenbar ist; das Verfahren umfassend:
a) Zuführen der Stückgüter (3) auf einer Stückgüterförderanlage (9), insbesondere einer Gepäckförderanlage, insbesondere einer Fluggepäckförderanlage, zu einer Sortierzelle (1);
b) Aufnehmen der besagter Sortierzelle (1) zugeführten Stückgüter (3) mittels eines Beladeroboters (4);
c) Laden der Stückgüter (3) durch den Beladeroboter (4) in den mittels des Sortierkriteriums (13) dem jeweiligen Stückgut (3) zuordenbaren Behälter (2).

2. Verfahren nach Anspruch 1, wobei die Stückgüterförderanlage (9) genau einen Förderer (61) umfasst, welcher der Sortierzelle (1) die Stückgüter (3) zuführt.

3. Verfahren nach Anspruch 1 oder 2, wobei die Stückgüterförderanlage (9) mindestens zwei Förderer (61) umfasst, welche der Sortierzelle (1) die Stückgüter (3) zuführen.

4. Verfahren nach einem der vorhergehenden Ansprüche, wobei der Beladeroboter (4) in horizontaler Richtung automatisch bewegt wird, um an eine Position gebracht zu werden, die geeignet ist, einen Behälter (2) mit einem von dem Roboter aufgenommenen Stückgut (3) beladen zu können.

5. Verfahren nach einem der vorhergehenden Ansprüche, wobei der Beladeroboter (4) in horizontaler Richtung auf einem linearen Fahrweg (11) automatisch bewegt wird, um an eine Position gebracht zu werden, die geeignet ist, einen der Behälter (2) mit einem von dem Roboter aufgenommenen Stückgut (3) beladen zu können;
wobei die mindestens zwei Behälter (2) auf einer ersten Seite des linearen Fahrwegs (11) angeordnet sind; und
wobei ein zuführender Teil der Stückgüterförderanlage (9), der der Sortierzelle (1) im Verfahrensschritt a) die Stückgüter (3) zuführt auf einer zweiten Seite des linearen Fahrwegs (11) angeordnet ist, welcher von der ersten Seite verschieden ist.

6. Verfahren nach einem der vorhergehenden Ansprüche, wobei die Sortierzelle (1) ein Lagersystem (12) umfasst, und die Stückgüter (3) auf der Stückgüterförderanlage (9) dem Lagersystem (12) zugeführt und in dieses eingebracht werden; und
wobei der Verfahrensschritt b) umfasst, dass der Beladeroboter (4) im Lagersystem (12) zur Lagerung eingebrachte Stückgüter (3) (direkt) aus dem Lager greift.

7. Verfahren nach einem der vorhergehenden Ansprüche, wobei die Sortierzelle (1) ein Lagersystem (12) umfasst, und die Stückgüter (3) auf der Stückgüterförderanlage (9) dem Lagersystem (12) zugeführt und von einer ersten Lagersystemseite (12) her in dieses eingebracht werden; und
wobei der Verfahrensschritt b) umfasst, dass der Beladeroboter (4) im Lagersystem (12) zur Lagerung eingebrachte Stückgüter (3) von einer zweiten Lagersystemseite (12), die von der ersten Lagersystemseite (12) verschieden ist, (direkt) aus dem Lager greift.

8. Sortierzelle zum Beladen von mindestens zwei Behältern (2) mit jeweils mehreren Stückgütern (3), insbesondere mit jeweils mehreren Gepäckstücken, wobei die Sortierzelle (1) einen Beladeroboter (4), mindestens zwei Behälterplätze (5), eine Zuführvorrichtung (6), einen Ladebereich (7) und ein Steuersystem (8) umfasst;
wobei jeder der mindestens zwei Behälterplätze (5) zur Aufnahme eines der mindestens zwei Behälter (2) ausgestaltet ist;
wobei die Zuführvorrichtung (6) ausgestaltet ist, Stückgüter (3) von einer Stückgüterförderanlage (9), insbesondere einer Fluggepäckförderanlage, aufzunehmen und dem Ladebereich (7) zuzuführen, von welchem der Beladeroboter (4) das Stückgut (3) aufnehmen (greifen) kann; und
wobei das Steuersystem (8) konfiguriert ist, den Beladeroboter (4) so anzusteuern, dass dieser ein dem Ladebereich (7) zugeführtes Stückgut (3) aufnimmt und dieses in den mittels des Sortierkriteriums (13) dem jeweiligen Stückgut (3) zuordenbaren Behälter (2) lädt.

9. Sortierzelle nach Anspruch 8, wobei die Zuführvorrichtung (6) genau einen Förderer (61) umfasst, welcher ausgestaltet ist, der Sortierzelle (1) die Stückgüter (3) zuzuführen.

10. Sortierzelle nach Anspruch 8 oder 9, wobei die Zuführvorrichtung (6) mindestens zwei Förderer (61) umfasst, welche ausgestaltet sind, der Sortierzelle (1) die Stückgüter (3) zuzuführen.

11. Sortierzelle nach einem der Ansprüche 8 bis 10, umfassend ein durch das Steuersystem (8) kontrollierbares Fahrmittel (10), wobei das Steuersystem (8) und das Fahrmittel (10) konfiguriert sind, den Beladeroboter (4) (als Ganzes) in horizontaler Richtung automatisch zu bewegen und in eine Position zu bringen, um einen Behälter (2) mit einem von dem Beladeroboter (4) gehaltenen Stückgut (3) beladen zu können.

12. Sortierzelle nach einem der Ansprüche 8 bis 11, wobei das Fahrmittel (10) einen linearen Fahrweg (11) umfasst; und
wobei die mindestens zwei Behälter (2) auf einer ersten Seite des linearen Fahrwegs (11) angeordnet sind und die Zuführvorrichtung (6) auf einer zweiten Seite des linearen Fahrwegs (11) angeordnet ist, welcher von der ersten Seite verschieden ist.

13. Sortierzelle nach einem der Ansprüche 8 bis 12, umfassend ein Lagersystem (12) das konfiguriert ist, mit der Zuführvorrichtung (6) zusammenzuwirken, um die Stückgüter (3) dem Lagersystem (12) zuzuführen und in dieses einzubringen;
wobei der Beladeroboter (4) ausgestaltet und durch das Steuersystem (8) kontrollierbar ist, um im Lagersystem (12) zur Lagerung eingebrachte Stückgüter (3) (direkt) aus dem Lagersystem (12) aufzunehmen.

14. Sortierzelle nach Anspruch 13, wobei die Zuführvorrichtung (6) ausgestaltet und angeordnet ist, die Stückgüter (3) auf einer ersten Seite des Lagersystems (12) in das Lagersystem (12) einzubringen und der Beladeroboter (4) angeordnet und ausgestaltet ist, im Lagersystem (12) zur Lagerung eingebrachte Stückgüter (3) von einer zweiten Seite des Lagersystems (12), die von der ersten Seite verschieden ist, aus dem Lagersystem (12) aufzunehmen.

15. Beladesystem **dadurch gekennzeichnet**, umfassend Mittel, welche eingerichtet sind die Verfahrensschritte nach einem der Ansprüche 1 bis 7 durchzuführen.
